# EUROPÄISCHE PATENTSCHRIFT

(11) **EP 2 404 367 B1**
(45) Veröffentlichungstag und Bekanntmachung des Hinweises auf die Patenterteilung: **20.09.2017**
(21) Anmeldenummer: 10712316.8
(22) Anmeldetag: 05.03.2010
(51) Int. Cl.: H02K 16/02, H02K 1/18, H02K 5/20, H02K 9/06, H02K 9/22, H02K 1/20, H02K 3/24, H02K 5/08, H02K 15/12, H02K 9/19

(54) **DOPPELROTORMOTOR**
DUAL-ROTOR MOTOR
MOTEUR À ROTOR DOUBLE

(30) Priorität: 05.03.2009 DE 102009011383
(43) Veröffentlichungstag der Anmeldung: 11.01.2012
(73) Patentinhaber: Sonter SA, 1700 Fribourg (CH)
(72) Erfinder: LEIBER, Heinz, 71739 Oberriexingen (DE); LEIBER, Thomas, 81675 München (DE)
(74) Vertreter: Lenzing Gerber Stute
(86) Internationale Anmeldenummer: PCT/EP2010/001384
(87) Internationale Veröffentlichungsnummer: WO 2010/099976

(56) Entgegenhaltungen:
- EP-A1- 1 503 485
- EP-A2- 1 480 316
- CH-A- 460 143

## Beschreibung

Die vorliegende Erfindung betrifft einen Doppelrotormotor nach dem Oberbegriff des Anspruchs 1.

### Stand der Technik

Doppelrotormotoren sind aus EP 1879283 (Matsushita), EP 1191673 (Denso) und US 5260642 (Huss) vorbekannt.

Aus der EP 1879283 und der EP 1191673 ist jeweils ein Statoraufbau vorbekannt, bei der zwei mit Permanentmagneten besetzte Rotoren über eine Welle miteinander verbunden sind. Die Rotoren werden dabei über einen mit Erregerspulen bewickelten Stator angetrieben. Der Stator ist einteilig ausgeführt und besteht aus inneren und äußeren Zähnen mit Polschuhen und einem tangentialen Verbindungssteg zwischen den Jochschenkeln. Auf jedem Verbindungssteg ist jeweils eine Erregerspule in Umfangsrichtung gewickelt, wie es in Fig. 8 der EP 1879283 und in Fig. 38 der EP 1191673 dargestellt ist. Durch diese Spulenanordnung wird der magnetische Fluss im Verbindungssteg tangential erzeugt. Der magnetische Fluss teilt sich dabei in den Jochzähnen in zwei magnetische Teilflüsse auf. Einer der Teilflüsse geht radial nach außen zum Außenrotor und schließt sich über den Außenrotor und über den benachbarten Statorzahn radial nach innen zum Verbindungssteg. Der zweite Teilfluss führt radial nach innen und schließt sich über den Innenrotor, und wird radial nach außen über den benachbarten Statorzahn geführt und schließt sich über den Verbindungssteg.

In EP 1191673 sind abweichend zum Statoraufbau der EP 1879283 die Rotoren nicht über eine Welle miteinander verbunden. Stattdessen wird die relative Rotorposition des äußeren und inneren Rotors über einen Kontrollalgorithmus gesteuert.

Aus der US 5260642 ist ein weiterer Doppelrotor bekannt. Dort sind mehrere mit Permanentmagneten bestückte Rotoren axial zueinander angeordnet und werden über einen außen liegenden Erregerstator angetrieben.

Aus EP 1 480 316 und EP 1 503 485 sind Motoren vorbekannt, bei denen Träger zwischen den Statorzähnen angeordnet sind, und die mittels die Träger durchgreifenden Schrauben am Gehäuse befestigt sind.

Die aus der EP 1191673 und EP 1879283 bekannte Wickeltechnik ist nachteilig. Die tangentiale Wickeltechnik ist zum einen sehr aufwändig, zum anderen kann bei automatisierter Wickelung kein guter Kupferfüllfaktor erzielt werden, da der durch die Polschuhe abdeckte Raum beim Bewickeln schlecht gefüllt werden kann. Zudem wird der magnetische Fluss vom Verbindungssteg in tangentialer Richtung erzeugt und dann um 90° in radiale Richtung umgelenkt. Dies ist für die Effizienz der Magnetkreise ungünstig und schließt den Einsatz von weichmagnetischem Material mit Kornorientierung aus.

### Aufgabe und Ausführung der Erfindung

Aufgabe der Erfindung ist es, ein Doppelrotormotor derart weiter zu entwickeln, dass eine sehr gute Leistungsdichte erreicht und eine kostengünstige Herstellung ermöglicht wird.

Diese Aufgabe wird vorteilhaft mit einem Doppelrotormotor mit den Merkmalen des Anspruchs 1 gelöst. Vorteilhafte Ausgestaltungen des Doppelrotors nach Anspruch 1 ergeben sich durch die Merkmale der Unteransprüche.

In den Ausführungen gemäß dem beschriebenen Stand der Technik bilden sich für den äußeren und inneren Rotor zwei getrennte Magnetkreise aus, die sich über den Verbindungssteg, Bezugszeichen 220 bei der EP 1191673 Fig.2, und Bezugszeichen 15 bei der EP 1879283, Fig. 1, schließen.

In der erfindungsgemäßen Ausführung werden einzelne Statorzähne, die im Querschnitt vorteilhaft eine Doppel-T-Form haben können, d.h. radial außen und innen Polschuhe aufweisen, zuerst axial bewickelt und dann in eine steife Trägerstruktur eingeführt, die zwischen den Statorzähnen liegt. Alternativ oder ergänzend können die Statorzähne mit Stiften in den Polschuhen mit dem Gehäuse verbunden werden. Der Stator weist im Gegensatz zum Stand der Technik keine tangentialen Verbindungsstege auf. Der magnetische Fluss wird in dieser Ausführung radial erzeugt und schließt sich über den Außenrotor, die benachbarten Statorzähne und den Innenrotor.

Die Einzelzähne werden über Träger bzw. Trägerelemente, die mit dem Gehäuse fest oder an einem relativ zum Gehäuse festen Teil verbunden sind, positioniert, gehalten und zu einem Stator zusammengefügt. Die Träger können dabei per Kraft- oder Formschluss mit dem Gehäuse oder dem relativ zum Gehäuse festen Teil verbunden sein. Es ist jedoch auch möglich, dass die Träger mit dem Gehäuse oder dem am Gehäuse angeordneten Teil einstückig ausgebildet oder an dieses angeformt, insbesondere angespritzt, sind. Ebenso ist es möglich, dass einer oder mehrere Träger einstückig mit dem Gehäuse oder dem am Gehäuse gehäusefest angeordneten Teil ausgebildet sind und die übrigen Träger als vereinzelte Teile am Gehäuse bzw. Teil befestigt sind.

Die Träger sind vorteilhaft aus einem Kunststoff, wie z.B. Duroplast, gefertigt. Der Kunststoff ist vorteilhaft hochfest und kann durch eingelegte Verstärkungselemente verstärkt werden. Es ist ebenfalls vorteilhaft, wenn Füllstoffe mit guten Wärmeleiteigenschaften in dem Kunststoff eingelagert sind.

Die Trägerelemente erstrecken sich dabei in axialer und radialer Richtung zwischen den benachbarten Statorzähnen und Erregerspulen und sind vorzugsweise im Querschnitt T-förmig oder Doppel-T-förmig ausgeführt, so dass der zusammengefügte Stator eine sehr hohe Steifigkeit für radiale und tangentiale Belastungen erreicht.

Nach dem Einführen der Einzelzähne in die Trägerelemente und das Gehäuse kann der Stator vorzugsweise mit einem gut wärmeleitendem Harz vergossen werden, um die Wärmeleitung weiter zu verbessern und die Steifigkeit der Struktur weiter zu erhöhen. Das Vergussmaterial hat auch den Vorteil, dass Toleranzen der Trägerelemente ausgeglichen werden. Zudem ist es vorteilhaft, wenn das Gehäuse derart ausgeformt ist, dass die Polschuhe der Einzelzähne in direktem Kontakt mit dem Gehäuse sind. So kann die Wärmeleistung weiter verbessert werden.

Ebenso ist es möglich, nach dem Einführen der Einzelzähne in die Trägerelemente und das Gehäuse die Teile mit einem Kunststoff zu umspritzen. Vorteilhaft dabei ist, wenn der Kunststoff z.B. durch Beigabe von Füllstoffen gute Wärmeleiteigenschaften aufweist.

Allen Ausführungsformen kann folgendes gemein sein:
a) jeder Statorzahn trägt mindestens eine Erregerspule, die insbesondere axial auf den Statorzahn gewickelt ist;
b) die Statorzähne werden in axialer Richtung auf die Träger aufgeschoben, wobei sich die Statorzähne auf den Trägern in radialer Richtung abstützen und die Träger die Statorzähne in Umfangsrichtung auf Abstand halten;
c) jeder Statorzahn weist einen radial nach außen weisenden Polschuh und einen radial nach innen weisenden Polschuh auf, wobei die Polschuhgeometrie derart ausgestaltet ist, dass der Statorzahn im Querschnitt als Doppel-T ausgebildet ist, wobei zwischen den am Mittelsteg angeformten Kragen, welche die Polschuhe bilden, die Erregerspule angeordnet ist;
d) die Polschuhe an ihren Randbereichen geometrisch an die Träger angepasst sind;
e) der Außenrotor und der Innenrotor eine zylindrische Wandung aufweisen, wobei Permanentmagnete an der Innenwandung des Außenrotors und der Außenwandung des Innenrotors angeordnet sind und der Außenrotor und Innenrotor drehfest miteinander oder mit einer Abtriebswelle verbunden sind;
f1) entweder der magnetische Fluss im Statorzahn im wesentlichen radial verläuft und sich über den Außenrotor, den benachbarten Statorzahn und den Innenrotor schließt, wobei zwischen den Polschuhen der Statorzähne und den Rotoren jeweils ein Luftspalt ist;
f2) oder alternativ der magnetische Rückschluss nicht über den Außen- und Innenrotor, sondern über ein den Außenrotor umgreifendes, insbesondere hohlzylindrisches, Rückschlusselement sowie über ein vom Innenrotor umgriffenes inneres Rückschlusselement erfolgt, wobei zwischen den Rückschlusselementen und den Rotoren jeweils ein weiterer Luftspalt ist, wobei dann vorteilhaft die zylindrische Wandung jedes Rotors dünnwandig ausgeführt ist und die Rückschlusselemente, über die sich der magnetische Fluss schließt, aus ferromagnetischem Stahl sind;
g) ein Lüfterrad den Elektromotor kühlt, wobei insbesondere das Lüfterrad mit dem Außen- oder Innenrotor verbunden ist;
h) die Permanentmagnete zur Bildung von Kühlkanälen in Umfangsrichtung zueinander beabstandet angeordnet sind.

Der erfindungsgemäße Aufbau weist folgende Vorteile im Vergleich zum Stand der Technik auf:
▪ höherer Wirkungsgrad des Motors durch radiale Flusserzeugung im Erregerjoch;
▪ sehr hohe Leistungsdichte durch Doppelrotor;
▪ einfache und kostengünstige Wickeltechnik durch Einzelzahnwickeltechnik;
▪ kostengünstiger Motoraufbau;
▪ sehr hoher Kupferfüllfaktor durch Einzelzahnwickelung, Einsatz von Rechteckdraht oder Profildraht möglich;
▪ Einsatz von kornorientiertem Material bzw. Blechmaterial mit Vorzugsrichtung in Einzelzähnen möglich durch radiale Flusserzeugung im Stator;
▪ sehr gute Steifigkeit möglich, dadurch dass die Spule in hochfesten Trägern liegt, die vorzugsweise aus Kunststoff ausgeführt sind, und die Polschuhe der Statorzähne mit dem Gehäuse in Kontakt sind. Zusätzlich wird die Wärmeabfuhr durch Verguss des gesamten Stators oder Umspritzen des gesamten Stators mit Kunststoff verbessert;
▪ Spulen vor Einbau prüfbar;
▪ gute radiale und tangentiale Steifigkeit;
▪ einfache elektrische Kontaktierung der Spule auf Gehäuserückseite bzw. in Aussparungen des Gehäuses;
▪ Möglichkeit zur Gestaltung eines hochdynamischen Motors durch minimierte Trägheitsmasse der Rotoren durch doppelten Luftspalt und dünnwandige Rotorausführung.

Nachfolgend werden anhand von Zeichnungen verschiedene Ausführungsformen des erfindungsgemäßen Doppelrotormotors dargestellt.

Es zeigen:
- Fig. 1:: Statorquerschnitt durch den Doppelrotormotor mit drei verschiedenen Ausführungen A, B, C der Trägerstruktur und der Rotoren;
- Fig. 2a:: erste Ausführung der Trägerstruktur;
- Fig. 2b:: zweite Ausführung der Trägerstruktur;
- Fig. 2c:: dritte Ausführung der Trägerstruktur;
- Fig. 2d:: vierte Ausführung der Trägerstruktur;
- Fig. 3a:: Längsschnitt durch Doppelrotormotor mit der ersten Trägerstruktur;
- Fig. 3b:: Längsschnitt durch Doppelrotormotor mit der zweiten Trägerstruktur;
- Fig. 3c:: Längsschnitt durch Doppelrotormotor mit der dritten Trägerstruktur;
- Fig. 4-4b:: Aufbau des Stators mit einteiliger Trägerstruktur (Gussgehäuse mit Träger);
- Fig. 5a-5b:: Alternativer Motoraufbau mit Stiftverbindung zwischen Stator und Gehäuse;
- Fig. 6:: Motor mit außen und innen umspritzten Polschuhen ;
- Fig. 7:: Trägerstruktur mit Verstärkungselement.

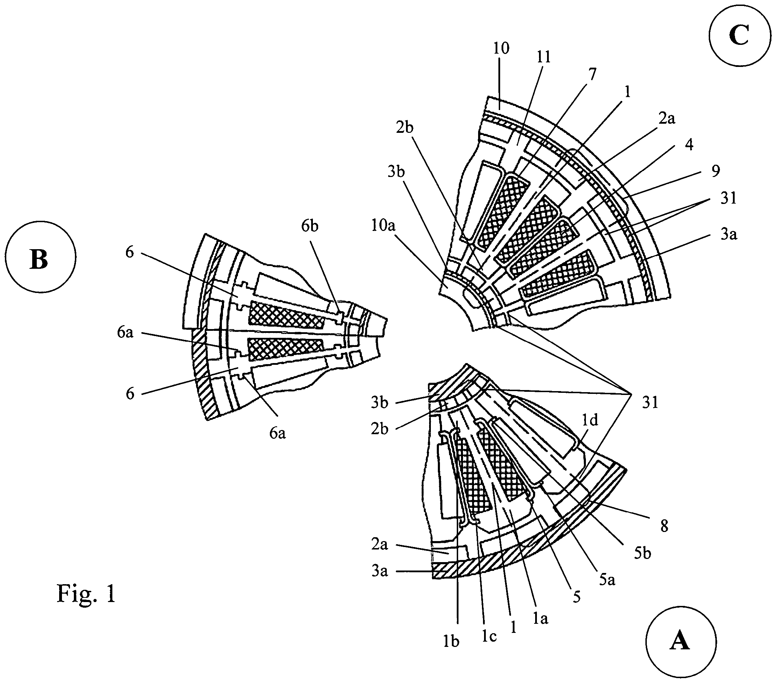

In Fig. 1 ist der Statorquerschnitt des erfindungsgemäßen Motoraufbaus für drei mögliche Ausführungsformen A, B und C des Stators und zwei möglichen Rotorgestaltungen dargestellt.

Der Stator besteht aus vereinzelten Statorzähnen 1 mit Polschuhen 1a im Außenbereich und Polschuhen 1b im Innenbereich, die mit Erregerspulen 4 bewickelt sind. Zudem weist der Motor einen mit Permanentmagneten 2a bestückten Außenrotor 3a und einen mit Permanentmagneten 2b bestückten Innenrotor 3b auf, wobei die Statorzähne 1 bei den Ausführungsformen A, B und C jeweils in unterschiedlichen Trägern 5, 6 und 7 gehalten sind.

Bei der Ausführungsform A, welche im unteren Teil der Fig.1 dargestellt ist, schließt sich der magnetische Fluss 8 über den Statorzahn 1, die Magnete 2a, den Außenrotor 3a, den benachbarten Statorzahn 1 und die Magnete 2b des Innenrotors 3b. In diesem Fall ist zwischen Statorzahn 1 und Rotor 3a, 3b jeweils innen und außen ein Luftspalt 31.

Bei der Ausführungsform C, welche im oberen Teil des Bildes dargestellt ist, ist der Außenrotor 3a und der Innenrotor 3b dünnwandig und vorzugsweise aus einem ferromagnetischen Material ausgeführt, so dass sich der magnetische Fluss 9 sowohl außen als auch innen über ein Gehäuseteil oder Einlegeteil 10, 10a, welches auch als Rückschlussteil bezeichnet werden kann, schließt. Das Gehäuseteil oder Einlegeteil 10, 10a ist aus ferromagnetischem Material. In dieser Motorausführungsform C sind jeweils zwei Luftspalte 31 außen und innen zwischen Rotor und Statorzahn 1 auf der einen Seite und Rotor und Rückschluss 10, 10a auf der anderen Seite.

Die Statorzähne 1 sind in der Ausführungsform A der Trägerstruktur durch zwei Kunststoffformteile 5 gehalten, die im Bereich des inneren und äußeren Polschuhs 1a, 1b zum jeweiligen Statorzahn 1 hin gebogene Kragen 5a und 5b aufweisen und somit im Querschnitt U-förmig ausgestaltet sind. Die Kragen 5a, 5b greifen jeweils in einen Absatz oder eine Vertiefung 1c des Statorzahns 1 in den Statorzahn ein. Der Polschuh 1a wird hierdurch im Bereich 1d abgestützt. Die Träger 5 sind vorzugsweise aus hochfestem Kunststoff oder können auch alternativ aus einem nichtferromagnetischem Material, wie Edelstahl z.B. V2A, zur minimalen Beeinflussung des magnetischen Kreises, ausgeführt sein.

In einer zweiten Ausführung B der Trägerstruktur ist das Trägerelement 6 zwischen zwei benachbarten Statorzähnen bzw. Jochzähnen 1 einteilig ausgeführt und weist eine im Querschnitt T-förmige Struktur auf, die im Außenbereich entsprechende Absätze 6a aufweist, die in die Kontur bzw. Nuten der Statorzähnen Jochzähne 1 eingreifen, wobei die Statorzähne auf diese Absätze 6a aufgeschoben werden.

In einer dritten Ausführung C der Trägerstruktur wird der bewickelte Statorzahn in einen einteiligen Träger 7 eingeführt, der die Erregerspule 4 beidseitig umfasst und im Bereich des äußeren und inneren Polschuhs nach innen gebogen ist, so dass er im Querschnitt Doppel-U-förmig gebogen ist und die Polschuhe abstützt bzw. mit den Polschuhen einen Formschluss zumindest in radialer Richtung bildet.

Zwischen den Magneten ist vorzugsweise ein Luftspalt 11 vorgesehen, der sich bei den Ausführungformen A und C der Trägerkonstruktion radial zwischen die Polschuhe der Statorzähne 1 erstreckt. Dieser Luftspalt 11 wird als Kühlkanal genutzt, um die Wärmeabfuhr weiter zu verbessern. Zusätzlich kann zur besseren Kühlung ein Lüfterrad eingesetzt werden.

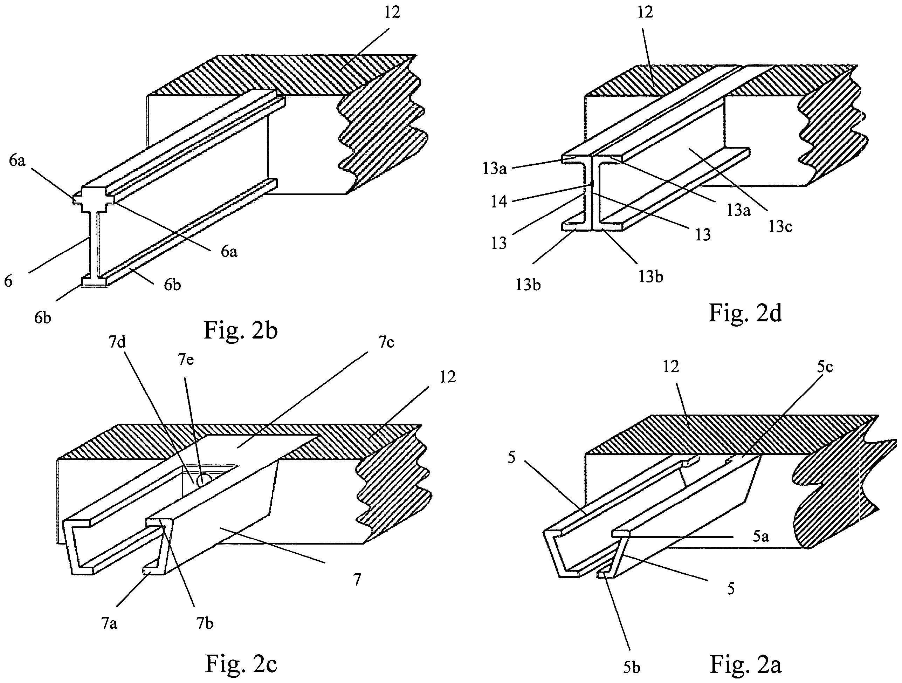

In Figur 2a ist die Trägerstruktur A aus Figur 1 perspektivisch dargestellt. Die Träger 5 sind in das Gehäuse 12 entweder eingestemmt, vergossen oder eingespritzt. Im Bereich des Gehäuses 12 ist der Kragen 5c breiter ausgeführt, um die Versteifung zu verbessern.

In Fig. 2b ist die Trägerstruktur B aus Fig.1 perspektivisch dargestellt. Das Trägerprofil 6 ist, wie bei der Trägerstruktur A gem. Fig. 2a, mit dem Gehäuse 12 verstemmt, verschweißt, vergossen oder eingespritzt oder bildet einen Teil des Gehäuses, welches insbesondere ein nachbearbeitetes Druckgussgehäuse mit Profilstegen sein kann. Der Träger 6 ist im Querschnitt als Doppel-T-Träger ausgebildet, wobei an seinen Kragen sich in axialer Richtung erstreckende Absätze bzw. Kragen 6a, 6b angeformt sind, die zur Fixierung und Lagerung der einschiebbaren Statorzähne dienen.

In Figur 2c ist die Trägerstruktur C aus Figur 1 perspektivisch dargestellt. Der Träger 7 weist zwei nach innen gerichtete Kragen 7a und 7b auf, auf denen der nicht dargestellte Statorzahn 1 mit seinen Polschuhen 1a, 1b aufliegt, bzw. welche in den Polschuh eingreifen. Der Träger 7 ist in diesem Fall vorzugsweise einteilig und weist eine Bodenwandung 7d sowie einen Verbindungsbereich 7c auf. Der Träger 7 umfasst die Erregerspule 4 komplett und ist mit dem Gehäuse 12 verbunden. Es ist jedoch auch möglich, den Träger 7 mit in oder an dem Gehäuse 12 zu vergießen oder einzuspritzen.

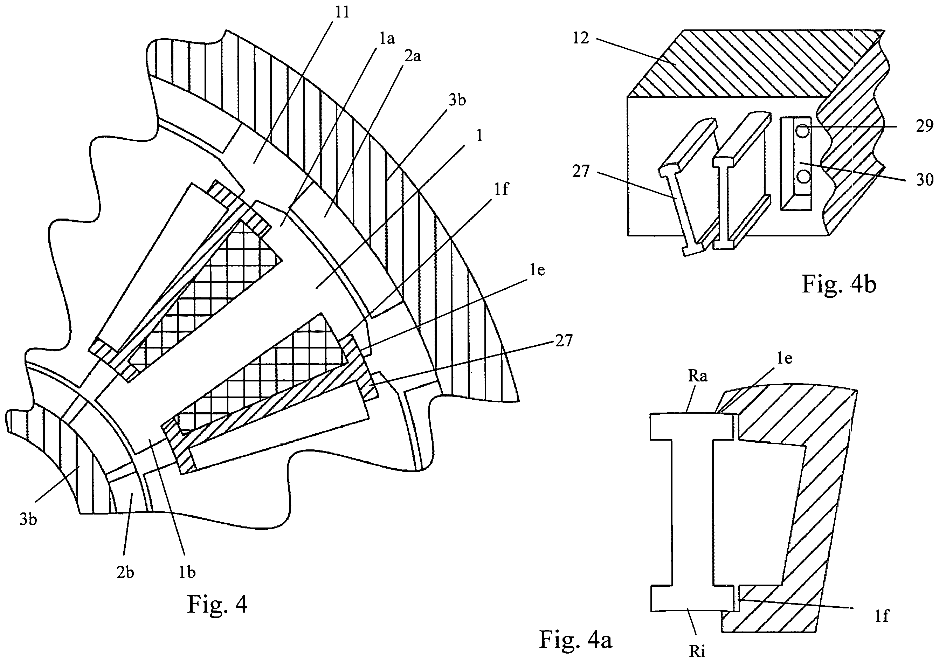

In Figur 2d ist eine Variante der Trägerstruktur A aus Figur 1 dargestellt. Hier liegen die Bodenwandungen 13c zweier im Querschnitt u-förmiger Träger 13 mit entsprechenden dem Zahn zugewandten Kragen 13a und 13b aneinander und sind miteinander z.B. durch Verkleben oder Kunststoffschweißen bei 14 verbunden. Der zusammengesetzte Träger 13 ergibt einen Doppel-T-Träger, der in das Gehäuseteil 12 hereinragt und mittels Vergießen oder Verstemmen mit dem Gehäuse verbunden ist. Alternativ ist es auch möglich, den Träger 13 in das Gehäuse einzuspritzen. Bei entsprechender Dimensionierung können die Auflageflächen ähnlich Fig. 4a nachträglich noch bearbeitet werden. Die aneinandergrenzenden Träger 13 können selbstverständlich auch als ein Teil zusammen spritzgußtechnisch hergestellt werden.

In Fig. 3a ist ein Längsschnitt des erfindungsgemäßen Doppelrotormotors mit der in Fig. 1 und Fig. 2c ausgeführten Trägerstruktur C dargestellt. Die Bodenwandung 7d des Trägers 7 ist mit dem Gehäuse 12 verbunden. Der Außenrotor 3a und der Innenrotor 3b können wie dargestellt einteilig ausgeführt sein. Es ist jedoch ebenso möglich, die Rotoren 3a, 3b mehrteilig auszubilden. Die Rotoren 3a, 3b sind mit einer Abtriebswelle 16, die über Lager 15a und 15b im Gehäuse gelagert sind, verbunden.

In Fig. 3b ist die Ausführung der Profilträgerstruktur der Fig. 2b im Längsschnitt des Motors ausgeführt. Der Profilträger 6 ist mit dem Gehäuse 12 verbunden, wobei die Erregerspulen 4 in das Gehäuse 12 hineinragen. Zusätzlich kann im Gehäuse 12 ein Kühlkanal für eine Wasserkühlung vorgesehen werden, der die Wärmeabfuhr des Motors verbessert. Die Wasserkanäle können erweitert werden, indem sie über ein U-Rohr 18a durch die äußeren Polzähne axial nach außen und die inneren Polzähne axial nach innen zurück zum Hauptwasserkanal 18 geführt werden. Zudem kann die Trägerstruktur auf einer Seite durch einen Verstärkungsring 19, 19a gegenüber dem Gehäuse weiter verstärkt werden. In dem Verstärkungsring 19, 19a stützen sich die ansonsten freien Enden der Profilträger 6 ab. Zur Verbesserung der Steifigkeit und der Wärmeabfuhr sind die Erregerspulen 4 mit dem Träger 6 und dem Gehäuse 12 mittels einer Vergussmasse oder Kunststoffspritzmasse 20 vergossen bzw. umspritzt.

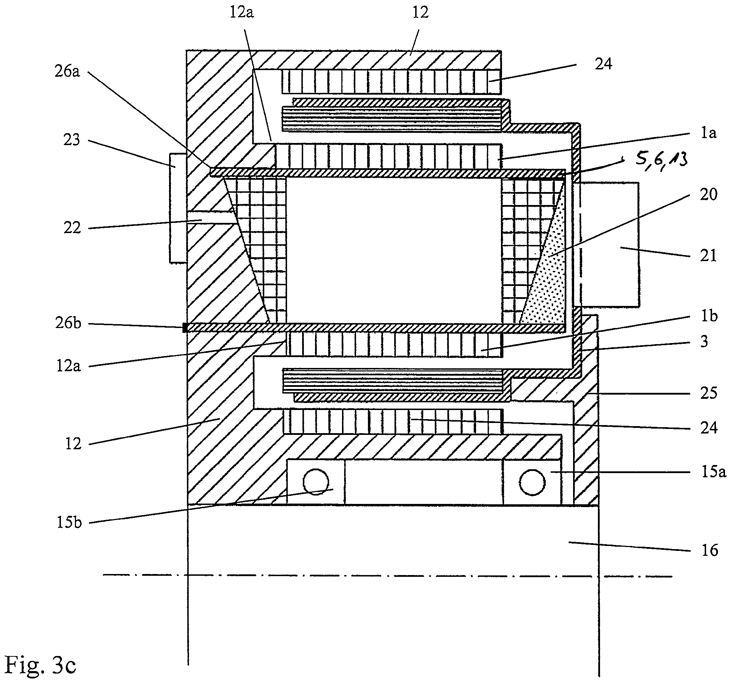

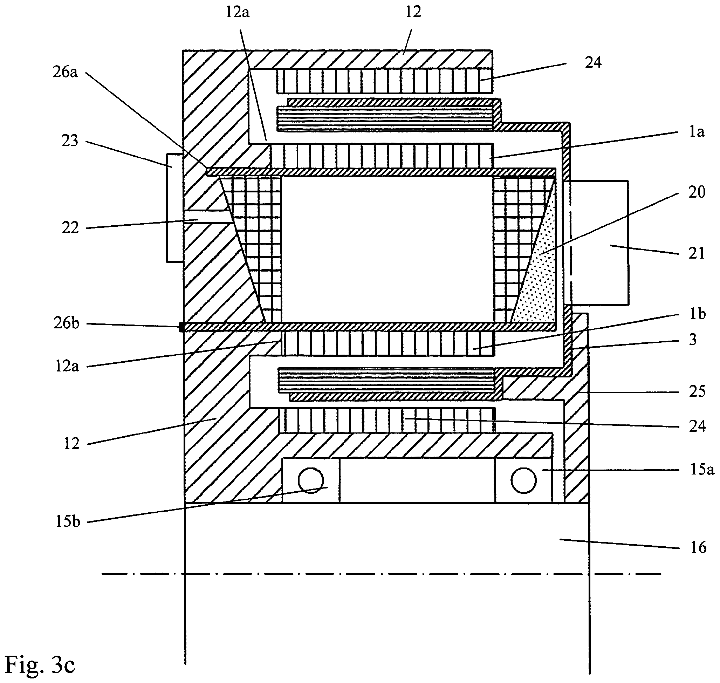

In Figur 3c ist der Längsschnitt der Trägerkonstruktion gemäß der Figuren 2a, 2b und Figur 2d dargestellt. Die Profilträger 5, 6, 13 sind im Gehäuse 12 mit ihren stirnseitigen Enden 26a versenkt oder ragen durch das Gehäuse 12 durch und sind stirnseitig am Gehäuse 12 mit ihren stirnseitigen Enden 26b verklebt, verstemmt oder eingespritzt. Es bietet sich an, im Gehäuse 12 entsprechende Aussparungen vorzusehen, sodass sowohl die Erregerspulen 4 im Gehäuse 12 versenkt sind als auch für die Spulenabgänge 22 entsprechende Aussparungen vorgesehen sind und ein entsprechendes Stanzgitter 23 zur Spulenkontaktierung am Gehäuse 12 befestigt werden kann. Ferner ist vorgesehen, dass die Polschuhe 1a und 1b in direktem Kontakt mit dem Gehäuse 12 sind und im Gehäuse 12 ein entsprechender Absatz 12a vorgesehen ist. Hierdurch kann die Wärmeabfuhr signifikant verbessert werden. Dargestellt in dieser Figur ist eine mehrteilige Rotorkonstruktion. Der Rotor 3 ist mit einem Mitnehmer 25 verbunden, welcher wiederum mit einer Welle 16 verbunden ist. Ebenso ist ein Lüfterrad 21 zur Verbesserung der Kühlung vorgesehen. Das Lüfterrad 21 ist vorzugsweise im Rotor 3 integriert. Dargestellt ist in dieser Figur das Rückschlussprinzip, wie es in Figur 1 dargestellt und mit dem Bezugszeichen 9 gekennzeichnet ist. Im Gehäuse 12 ist ein ferromagnetisches Teil 24, z.B. in Form eines Stanzbleches oder eines Rohres, eingelegt, über das der magnetische Fluss geschlossen wird.

Bei einer großen Ausführung des erfindungsgemäßen Motors mit großen Durchmessern des Innen- und Außenrotors entsteht ein Hohlraum im Motor. Dieser kann sinnvollerweise für eine Integration eines Getriebes oder Spindeltriebes genutzt werden. Bei kleineren Abmessungen bietet sich an, die Lager- bzw. Abtriebswelle 16 zur Aufnahme eines Getriebes, vorzugsweise eines Planentengetriebes, entsprechend zu verlängern. Hierzu muss das Gehäuse 12 und die Aufnahme entsprechend gestaltet werden. Der erfindungsgemäße Motor mit integriertem Getriebe kann dann z.B. als Radnabenantrieb eingesetzt werden.

In den Figuren 4 bis 4b ist eine Variante der Profilträgerkonstruktion gem. Fig. 2b dargestellt. Hier ist vorgesehen, dass die Polzähne 1a im Außenbereich 1e auf einem Doppel-T-förmigen Profilträger 27 aufliegen und ein geringer Luftspalt 1f zum Toleranzausgleich vorgesehen ist. Diese Lösung kann in Gusstechnik hergestellt werden.

In Figur 4a wird der Profilträger 27 der Figur 4 vorzugsweise nur am Außenradius Ra und Innenradius Ri nachbearbeitet. Im Bereich des Statorzahns 1e ist ein entsprechender Radius vorgesehen, so dass ein passgenaues Anliegen gewährleistet ist. Da die Statorzähne stanzpaketiert hergestellt werden, ist eine sehr hohe Genauigkeit der Querschnittskontur der Statorzähne und Luftspalte erreichbar. Wie in Figur 4b dargestellt, bilden die Profilträger 27 einen Teil des Gehäuses 12. Im Gehäuse 12 sind Vertiefungen 30 für die nicht dargestellten Erregerspulen sowie Öffnungen 29 für die elektrische Kontaktierung vorgesehen.

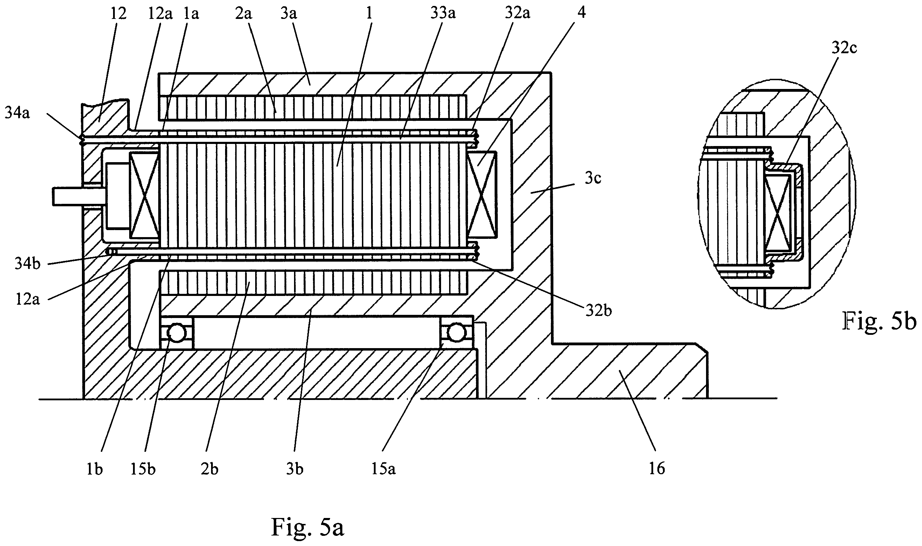

Die Figuren 5a und 5b zeigen eine Ausführungsform, bei der die Festigkeit des Stators erhöht ist. Dazu sind an der Stirnseite der Polschuhformteile 1 ein äußerer Verstärkungsring 32a und ein innerer Verstärkungsring 32b befestigt. Diese werden außerhalb bzw. innerhalb der Erregerspulen 4 angebracht. Der äußere Spannstift 33a und der innere Spannstift 33b werden durch das Polschuhformteil 1 gepresst und stirnseitig mit den Verstärkungsringen 32a und 32b verbunden, vorzugsweise verstemmt. An der gegenüberliegenden Seite werden die Spannstifte 33a und 33b mit dem Gehäuse 12 verbunden. Dies kann durch Verstemmen bei 34a oder Einpressen bei 34b erfolgen. Somit können die Spannstifte 33a und 33b die Zugspannungen, welche in den Polschuhteilen 1 aufgrund von z.B. radialen Kräften entstehen, aufnehmen. Die Wärmeabfuhr erfolgt unterstützend über einen direkten Kontakt der Polschuhe 1a und 1b mit dem Gehäuse 12a. Durch die Verstärkungsringe 32a und 32b werden die Polschuhteile 1 mit ihren benachbarten Polschuhteilen verbunden. In Verbindung mit den Spannstiften 33a und 33b sind somit alle einzelnen Polschuhteile 1 zu einem Verbund vereint, welcher die auftretenden Kräfte besser aufnehmen kann und insgesamt stabiler wird. Alternativ ist es auch möglich auf die Spannstifte 33a, 33b zu verzichten indem die Verstärkungsringe 32a und 32b direkt mit der Stirnseite der Polschuhteile 1 verbunden werden. Dies kann z.B. durch Schweißen erfolgen. Zudem ist es denkbar, auf die Trägerstruktur gemäß Figur 2a und 2d zu verzichten und die Statorzähne mit dem Gehäuse ausschließlich über Stifte entsprechend der Spannstifte 33a und 33b zu verbinden. Dies ist insbesondere dann möglich, wenn die Radialkräfte gering sind (z.B. kurzer Motor) bzw. die Polschuhe für einen großen Motor groß ausgeführt sind.

In Figur 5b ist alternativ zu den Verstärkungsringen 32a und 32b ein einteiliger Verstärkungsring 32c dargestellt, der die Spulen stirnseitig umgreift. Hierdurch kann die Gesamtfestigkeit weiter erhöht werden.

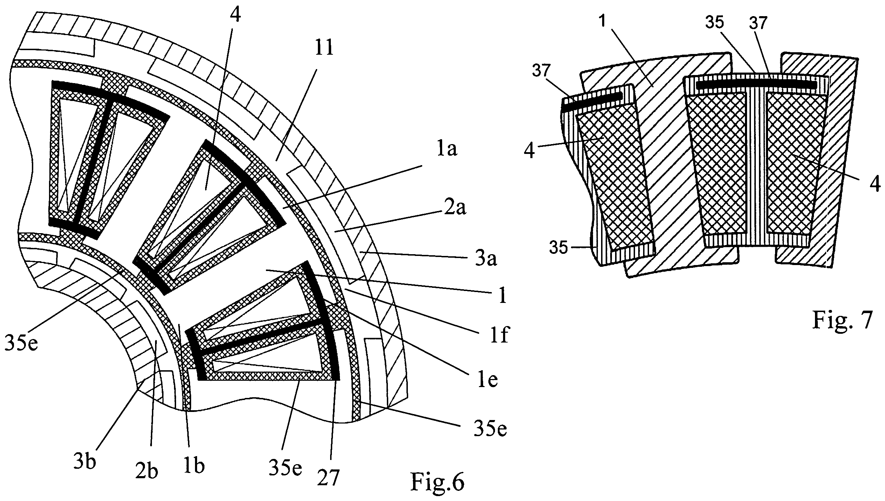

Die Figur 6 zeigt eine Erweiterung der T-Trägerstruktur 35. Die Träger 35 sind mit einem Außenring 35e als Teil des Spritzgusses bzw. eines Vergusses mit Giesharz über die Bereiche 35s verbunden, welcher die Außenpole 1a einschließlich dem Außenstärkungsring 35e umfasst. Dieser Ring 35e ist auch bei kleiner Wandstärke sehr wirksam für die Versteifung bei tangentialer Beanspruchung. Im Bereich Z-Z ist eine weitere Alternative dargestellt, bei der sowohl der äußere als auch der innere Jochpol 1a, 1b dünnwandig durch Ringe 35e umspritzt sind und mit Stegen zwischen den Spulen verbunden sind. Zur Herstellung einer dünnen Wandstärke eignet sich vorzugsweise Duroplast. Hierzu kann zur Einspritzung der Bereich E zwischen den Polen gegebenenfalls wegen der Gratbildung etwas vertieft ausgestaltet werden.

Durch o.g. Maßnahmen kann der Spulenraum zwischen den Polen voll genutzt werden, was den Wirkungsgrad steigert. Mit diesen Maßnahmen lässt sich eine große Steifheit mit guter Wärmeabfuhr erzielen, so dass es möglich ist, einen Motor mit großer Leistung mit kleinem Durchmesser und relativ langen freitragenden Spulen zu realisieren.

Die Figur 7 zeigt den Doppel-T-Träger 35 mit einem radial äußeren Verstärkungselement 37. Das Verstärkungselement 37 kann alternativ relativ zu den Erregerspulen 4 jedoch auch radial innen angeordnet werden. Selbstverständlich können auch außen und innen Verstärkungselemente 37 angeordnet und eingespritzt werden. Vorzugsweise ist das Verstärkungselement 37 aus einem schlecht leitfähigem metallischen Material, z.B. Edelstahl, mit Ausstanzungen 37a zur Reduzierung der Stromleitfähigkeit und somit der Wirbelstromverluste. Der Doppel-T-Träger 35 wird als gesondertes Kunststoffspritzteil mit eingespritztem Verstärkungselement 37 hergestellt und dann am Gehäuse 12 angeordnet, so dass anschließend die Statorzähne bzw. Joche 1 mit den Erregerspulen 4 auf die Träger 35 aufgeschoben werden können.

### Bezugszeichenliste:

- 1: Polschuhformteil als Statorzahn
- 1a: äußerer Polschuh des Polschuhformteils bzw. Statorzahns
- 1b: innerer Polschuh des Polschuhformteils bzw. Statorzahns
- 1c, 1d, 1e: Gestaltungsmerkmale der Randkontur des Polschuhs
- 1f: Luftspalt
- 2a: Permanentmagnete des Außenrotors
- 2b: Permanentmagnete des Innenrotors
- 3: Rotor
- 3a: Außenrotor
- 3b: Innenrotor
- 4: Erregerspule
- 5: Trägerstruktur aus U-förmigen Blechen
- 5a, 5b: gebogene Kragen
- 6: Trägerstruktur aus Profilstegen
- 6a, 6b: Absatz/Kragen
- 7: Trägerstruktur aus Spulenschale
- 7a, 7b: Kragen
- 7c: Verbindungsbereich
- 7d: Bodenwandung
- 7e: Niet-/Schraubverbindung
- 8: magnetischer Fluss bei Doppelrotormotor mit einfachen Luftspalt zwischen Rotor und Stator
- 9: magnetischer Fluss bei Doppelrotormotor mit doppeltem Luftspalt zwischen Stator und Rotor
- 10: Rückschluss des Außenrotors mittels Einlegeteil
- 10a: Rückschluss des Innenrotors mittels Einlegeteil
- 11: Kühlkanal
- 12: Gehäuse
- 12a: Gehäuseabsatz
- 13: T-Träger aus 2 u-förmigen Blechen
- 14: Schweißverbindung der u-förmigen Bleche
- 15a,15b: Wellenlagerung
- 16: Abtriebswelle
- 17: Nietverbindung

- 18: Wasserkanal
- 19, 19a: Versteifungsring/-scheibe bzw. Verstärkungsring/-scheibe
- 20: Vergussmasse
- 21: Lüfterrad
- 22: Gehäuseaussparung für elektrischen Anschluss/Spulenabgänge
- 23: Stanzgitter
- 24: ferromagnetisches Gehäuseeinlegeteil (Rückschluss für Magnetkreis)
- 25: Mitnehmer
- 26a: Aussparung für Träger für Einspritzen, Einstemmen
- 26b: stirnseitiges Verschweißen des Trägers
- 27: Verstärkungssteg als Doppel-T-förmiger Profilträger
- 29: Gehäuseaussparungen für elektrischen Anschluss
- 30: Gehäuseaussparungen für Erregerspulen
- 31: Luftspalt
- 32a: äußerer Verstärkungsring
- 32b: innerer Verstärkungsring
- 32c: Verstärkungsschale
- 33a: äußerer Spannstift
- 33b: innerer Spannstift
- Ra: Außenradius
- Ri: Innenradius

## Patentansprüche

1. Elektromotor mit einem Außenrotor (3a) und einem Innenrotor (3b), wobei der Erregerspulen (4) tragende Stator hohlzylindrisch ausgebildet ist und in den topfförmig ausgebildeten Außenrotor (3a) eingreift und stirnseitig mit dem Gehäuse oder einem mit dem Gehäuse fest verbundenen Teil (12) des Elektromotors verbunden ist, wobei der Stator mehrere Statorzähne (1) aufweist, die von sich in axialer und radialer Richtung zwischen den Statorzähnen (1) erstreckenden Trägern (5, 6, 7, 13, 27) gehalten sind, **dadurch gekennzeichnet, dass** die Träger (5, 6, 7, 13, 27) zuerst am Gehäuse (12) oder am mit dem Gehäuse fest verbundenen Teil (12) des Elektromotors angeordnet sind und mit dem Gehäuse oder dem mit dem Gehäuse fest verbundenen Teil (12) des Elektromotors kraft- und/oder formschlüssig verbunden sind, und anschließend die Statorzähne (1) auf die Träger (5, 6, 7, 13, 27) aufgeschoben werden und damit von den Trägern festgehalten oder abgestützt sind.

2. Elektromotor nach Anspruch 1, **dadurch gekennzeichnet, dass** die Träger (5, 6, 7, 12, 13, 27) mit dem Gehäuse oder dem mit dem Gehäuse fest verbundenen Teil des Elektromotors einstückig ausgebildet sind.

3. Elektromotor nach einem der vorhergehenden Ansprüche,
**dadurch gekennzeichnet, dass** die Träger (5, 6, 7, 12, 13, 27) an das Gehäuse oder mit dem Gehäuse fest verbundenen Teil angespritzt sind.

4. Elektromotor nach einem der vorhergehenden Ansprüche,
**dadurch gekennzeichnet, dass** die Träger (5, 6, 7, 13, 27) im Querschnitt Doppel-T-Träger-förmig ausgebildet sind.

5. Elektromotor nach einem der vorhergehenden Ansprüche, **dadurch gekennzeichnet, dass** das Gehäuse oder das Teil aus Aluminium, insbesondere ein Druckgussteil, ist.

6. Elektromotor nach einem der Ansprüche 1 bis 5, **dadurch gekennzeichnet, dass** die Träger (5, 6, 7, 13, 27) aus Kunststoff, insbesondere einem hochfesten Kunststoff, gefertigt sind.

7. Elektromotor nach Anspruch 6, **dadurch gekennzeichnet, dass** in den Trägern (5, 6, 7, 13, 27) Verstärkungselemente und/oder Füllstoffe mit einem hohen E-Modul eingelagert sind.

8. Elektromotor nach einem der vorhergehenden Ansprüche, **dadurch gekennzeichnet, dass** die von den Trägern (5, 6, 7, 13, 27) in Position gehaltenen Statorzähne (1) mit darauf angeordneten Erregerspulen (4) zusammen mit den Trägern (5, 6, 7, 13, 27) in einer Vergussmasse oder mittels eines Kunststoffs umspritzt eingegossen sind.

9. Elektromotor nach Anspruche 8, **dadurch gekennzeichnet, dass** in das Harz oder die Kunststoffmasse Verstärkungselemente, insbesondere plattenförmige oder gebogene plattenförmige Elemente, eingebettet sind, die sich in axialer Richtung erstrecken.

10. Elektromotor nach Anspruch 9, **dadurch gekennzeichnet, dass** erste Verstärkungselemente mit den Statorzähnen formschlüssig verbunden sind.

11. Elektromotor nach Anspruch 9 oder 10, **dadurch gekennzeichnet, dass** zweite Verstärkungselemente sich über zumindest einen Teilbereich der axialen Länge der Träger (35) erstrecken.

12. Elektromotor nach einem der Ansprüche 9 bis 11, **dadurch gekennzeichnet, dass** die Verstärkungselemente jeweils mindestens eine fensterartige Durchgriffsöffnung, insbesondere Langlochausstanzungen, aufweisen.

13. Elektromotor nach einem der Ansprüche 9 bis 12, **dadurch gekennzeichnet, dass** die Verstärkungselemente aus elektrisch nicht oder nur geringfügig leitfähigem Material sind.

14. Elektromotor nach einem der Ansprüche 9 bis 13, **dadurch gekennzeichnet, dass** die Verstärkungselemente über ihre Durchgriffsöffnungen mit dem Kunststoff verkrallen und/oder über einen Verbindungssteg/Verbindungsring miteinander verbunden sind.

15. Elektromotor nach einem der Ansprüche 9 bis 14, **dadurch gekennzeichnet, dass** zumindest einige der Verstärkungselemente mit ihren Endbereichen in Ausnehmungen des Gehäuses oder des mit dem Gehäuse verbundenen Teils (12) einliegen oder mit diesem verbunden, insbesondere angeformt oder eingespritzt, sind.

16. Elektromotor nach einem der vorhergehenden Ansprüche, **dadurch gekennzeichnet, dass** im Gehäuse (12) und/oder im Bereich der Polschuhe (1a, 1b) Kühlkanäle (18, 18a) für eine Wasserkühlung vorgesehen sind.

17. Elektromotor nach einem der vorhergehenden Ansprüche, **dadurch gekennzeichnet, dass** die Träger (6) mit ihren dem Gehäuse abgewandten Stirnseiten mit einem Versteifungsring oder Versteifungsscheibe (19) verbunden sind.

18. Elektromotor nach einem der vorhergehenden Ansprüche, **dadurch gekennzeichnet, dass** die Polschuhe (1a, 1b) mit ihrem dem Gehäuse abgewandten Stirnseiten über ein Verbindungssteil, insbesondere mit Verstärkungsringen (32a, 32b) oder einer Versteifungsschale (32c), miteinander verbunden sind.

19. Verfahren zur Herstellung eines Elektromotors nach einem der vorhergehenden Ansprüche.

20. Verfahren zur Herstellung eines Elektromotors nach Anspruch 19, **dadurch gekennzeichnet, dass** die mit den Erregerspulen (4) versehenen Statorzähne (1) axial auf die Träger aufgeschoben werden, wonach anschließend die mit den Erregerspulen (4) versehenen Statorzähne und zumindest die Träger (1) mit Harz umgossen oder mit Kunststoff umspritzt werden.

## Claims

1. Electric motor having an external rotor (3a) and an internal rotor (3b), whereby the stator which bears the excitation coils (4) is designed in a hollow cylindrical manner and engages with the external rotor (3a) which is designed to be pot-shaped and is connected in a fixed manner to the housing or a part (12) of the electric motor that is connected to the electric motor on the front face, whereby the stator has several stator teeth (1) which are held by supports (5, 6, 7, 13, 27) which extend in an axial and radial direction between the stator teeth (1), **characterised in that** the supports (5, 6, 7, 13, 27) are initially arranged on the housing (12) or on a part (12) of the electric motor that is connected in a fixed manner to the housing and are connected in a non-positive and/or positive-locking manner to the housing or the part (12) of the electric motor that is connected in a fixed manner to the housing and afterwards the stator teeth (1) are slidden on the supports (5, 6, 7, 13, 27) and therefore held or supported by the supports.

2. Electric motor according to Claim 1, **characterised in that** the supports (5, 6, 7, 12, 13, 27) are formed in one piece with the housing or the part of the electric motor that is connected to the housing in a fixed manner.

3. Electric motor according to any one of the preceding claims, **characterised in that** the supports (5, 6, 7, 12, 13, 27) are molded to the housing or the part of the electric motor that is connected to the housing in a fixed manner.

4. Electric motor according to any one of the preceding claims, **characterised in that** the supports (5, 6, 7, 13, 27) are formed in a double-T support shape in the cross section.

5. Electric motor according to any one of the preceding claims, **characterised in that** the housing or the part are made of aluminium, in particular a die cast part.

6. Electric motor according to any one of Claims 1 to 5, **characterised in that** the supports (5, 6, 7, 13, 27) are manufactured from plastic, in particular a high-strength plastic.

7. Electric motor according to Claim 6, **characterised in that** reinforcement elements and/or filler materials with a high e-module are embedded in the supports (5, 6, 7, 13, 27).

8. Electric motor according to any one of the preceding claims, **characterised in that** the stator teeth (1) held in position by the supports (5, 6, 7, 13, 27) with excitation coils (4) arranged on them are moulded using extrusion coating into a casting compound or by means of a plastic.

9. Electric motor according to Claim 8, **characterised in that** reinforcement elements, in particular plate-shaped or curved plate-shaped elements which extend in an axial direction, are embedded in the resin or the plastic mass.

10. Electric motor according to Claim 9, **characterised in that** first reinforcement elements are connected to the stator teeth in a positive-locking manner.

11. Electric motor according to Claim 9 or 10, **characterised in that** second reinforcement elements extend over at least part of the axial length of the supports (35).

12. Electric motor according to any one of Claims 9 to 11, **characterised in that** the reinforcement elements each have at least one window-like reach-through opening, in particular slotted hole perforations.

13. Electric motor according to any one of Claims 9 to 12, **characterised in that** the reinforcement elements are made of a material that does not conduct electricity or is only slightly conductive.

14. Electric motor according to any one of Claims 9 to 13, **characterised in that** the reinforcement elements lock to the plastic by means of the slotted hole perforations and/or are connected to one another by means of a connecting bar/connecting ring.

15. Electric motor according to any one of Claims 9 to 14, **characterised in that** the end regions of at least some of the reinforcement elements are in recesses of the housing or the part (12) connected to the housing or are connected to this, in particular preformed or injected.

16. Electric motor according to any one of the preceding claims, **characterised in that** cooling channels (18, 18a) for water cooling are providing in the housing (12) and/or in the region of the pole shoe (1a, 1b).

17. Electric motor according to any one of the preceding claims, **characterised in that** the front faces of the supports (6) that face away from the housing are connected to a stiffening ring or stiffening disc (19).

18. Electric motor according to any one of the preceding claims, **characterised in that** the front faces of the pole shoes (1a, 1b) that face away from the housing are connected to one another by means of a connecting part, in particular with stiffening rings (32a, 32b) or a stiffening bowl (32c).

19. Method for the production of an electric motor according to any one of the preceding claims.

20. Method for the production of an electric motor according to Claim 19, **characterised in that** the stator teeth (1) with the excitation coils (4) are axially displaced on the supports, after which the stator teeth with the excitation coils (4) and at least the supports (1) are recast with resin or extrusion coated with plastic.

## Revendications

1. Moteur électrique comportant un rotor extérieur (3a) et un rotor intérieur (3b), le stator portant les bobines d'excitation (4) ayant la forme d'un cylindre creux et s'encastrant dans le rotor extérieur (3a) conçu en forme de pot, le stator étant connecté côté frontal au boîtier ou à une partie (12) du moteur électrique reliée fixement au boîtier, le stator comportant plusieurs dents (1) maintenues par des supports (5, 6, 7, 13, 27) s'étendant en direction axiale et radiale entre les dents (1), **caractérisé en ce que** les supports (5, 6, 7, 13, 27) sont agencés tout d'abord sur le boîtier (12) ou sur la partie (12) du moteur électrique reliée fixement au boîtier et sont reliés par liaison de forme et/ou de force au boîtier (12) ou à la partie (12) du moteur électrique reliée fixement au boîtier, et successivement les dents (1) du stator sont enfichées sur les supports (5, 6, 7, 13, 27) et sont ainsi retenues ou soutenues par les supports (5, 6, 7, 13, 27).

2. Moteur électrique selon la revendication 1, **caractérisé en ce que** les supports (5, 6, 7, 12, 13, 27) sont réalisés d'une seule pièce avec le boîtier ou avec la partie (12) du moteur électrique reliée fixement au boîtier.

3. Moteur électrique selon l'une quelconque des revendications précédentes, **caractérisé en ce que** les supports (5, 6, 7, 12, 13, 27) sont moulés avec le boîtier ou avec la partie reliée fixement au boîtier.

4. Moteur électrique selon l'une quelconque des revendications précédentes, **caractérisé en ce que** les supports (5, 6, 7, 12, 13, 27) sont conçus en section transversale en forme de support double en T.

5. Moteur électrique selon l'une quelconque des revendications précédentes, **caractérisé en ce que** le boîtier ou la partie (12) est en aluminium, en particulier une partie coulée sous pression.

6. Moteur électrique selon l'une des revendications de 1 à 5, **caractérisé en ce que** les supports (5, 6, 7, 12, 13, 27) sont fabriqués en matière synthétique, en particulier en une matière synthétique à haute résistance.

7. Moteur électrique selon la revendication 6, **caractérisé en ce que** des éléments de renfort et/ou des matériaux de remplissage avec un module E élevé sont insérés dans les supports (5, 6, 7, 12, 13, 27).

8. Moteur électrique selon l'une quelconque des revendications précédentes, **caractérisé en ce que** les dents (1) du stator, maintenues en position par les supports (5, 6, 7, 12, 13, 27) avec des bobines d'excitation (4) y étant agencées, sont moulées par injection conjointement avec les supports (5, 6, 7, 12, 13, 27) dans une masse de coulage ou par l'intermédiaire d'une matière synthétique.

9. Moteur électrique selon la revendication 8, **caractérisé en ce que** des éléments de renfort, en particulier des éléments en forme de plaque ou des éléments en forme de plaque incurvés qui s'étendent en direction axiale sont incorporés dans la résine ou la masse de matière synthétique.

10. Moteur électrique selon la revendication 9, **caractérisé en ce que** des premiers éléments de renfort sont reliés par liaison de forme avec les dents du stator.

11. Moteur électrique selon la revendication 9 ou 10, **caractérisé en ce que** des deuxièmes éléments de renfort s'étendent sur au moins une zone partielle de la longueur axiale des supports (35).

12. Moteur électrique selon l'une des revendications de 9 à 11, **caractérisé en ce que** les éléments de renfort présentent respectivement au moins une ouverture d'accès en forme de fenêtre, en particulier des découpes en forme de trou oblong.

13. Moteur électrique selon l'une des revendications de 9 à 12, **caractérisé en ce que** les éléments de renfort sont en un matériau électrique non conducteur ou faiblement conducteur.

14. Moteur électrique selon l'une des revendications de 9 à 13, **caractérisé en ce que** les éléments de renfort s'agrippent à travers leurs ouvertures d'accès au matériau synthétique et/ou sont reliés l'un à l'autre par un pont de liaison/bague de liaison.

15. Moteur électrique selon l'une des revendications de 9 à 14, **caractérisé en ce qu'**au moins certains des éléments de renfort sont logés avec leurs parties d'extrémité dans des cavités du boîtier ou de la partie (12) reliée au boîtier ou sont reliés à celui-ci, en particulier ils sont moulés ou intégrés par injection.

16. Moteur électrique selon l'une quelconque des revendications précédentes, **caractérisé en ce que** l'on prévoit des canaux de refroidissement (18, 18a) pour un refroidissement à l'eau dans le boîtier (12) et/ou dans la zone des patins polaires (1a, 1b).

17. Moteur électrique selon l'une quelconque des revendications précédentes, **caractérisé en ce que** les supports (6) sont reliés avec leurs côtés avant opposés au boîtier à un anneau de renfort ou à un disque raidisseur (19).

18. Moteur électrique selon l'une quelconque des revendications précédentes, **caractérisé en ce que** les patins polaires (1a, 1b) sont mutuellement reliés avec leurs côtés avant opposés au boîtier par l'intermédiaire d'une partie de liaison, en particulier avec des anneaux de renfort (32a, 32b) ou une coquille de serrage (32c).

19. Procédé pour la production d'un moteur électrique selon l'une quelconque des revendications précédentes.

20. Procédé pour la production d'un moteur électrique selon 19, **caractérisé en ce que** les dents de stator (1) pourvues de bobines d'excitation (4) sont enfichées axialement sur les supports, à la suite de quoi les dents du stator (1) pourvues de bobines d'excitation (4) et au moins les supports (1) sont moulés avec de la résine ou enrobés de matière synthétique par extrusion.
